# EUROPEAN PATENT SPECIFICATION

(11) **EP 2 910 360 B1**
(45) Date of publication and mention of the grant of the patent: **15.07.2020**
(21) Application number: 15151185.4
(22) Date of filing: 14.01.2015
(51) Int. Cl.: B29C 57/02

(54) **METHOD AND DEVICE FOR BELLING PIPES MADE OF THERMOPLASTIC MATERIAL**
VERFAHREN UND VORRICHTUNG ZUR VERMUFFUNG VON ROHREN AUS THERMOPLASTISCHEM MATERIAL
PROCÉDÉ ET DISPOSITIF DE TULIPAGE DE TUYAUX CONSTITUÉS DE MATÉRIAUX THERMOPLASTIQUES

(30) Priority: 21.01.2014 IT BO20140024
(43) Date of publication of application: 26.08.2015
(73) Proprietor: SICA S.P.A., 48011 Alfonsine (Ravenna) (IT)
(72) Inventor: Tabanelli, Giorgio, 48010 Cotignola (Ravenna) (IT)
(74) Representative: Milli, Simone

(56) References cited:
- EP-A1- 2 368 693
- US-A- 6 033 617
- US-A1- 2013 264 820

## Description

This invention relates to a method for belling pipes made of thermoplastic material.

More specifically, this invention relates to a method for forming bells equipped with integrated gasket, at the end of pipes made of thermoplastic material.

In the production of pipes made of thermoplastic material designed for making pipes for delivering and/or discharging fluids (used for example in building works, in the drains and sewerage networks, in drinking water networks) belling machines are used for shaping an end portion of the pipes into the characteristic "bell" shape, which has a wider shape relative to the normal diameter of the pipe and serves to connect one pipe with the next to form a conduit.

An unshaped end of a pipe is normally inserted in the bell-shaped end of the pipe upstream or downstream in the conduit.

Belling machines, which are generally automatic, are usually installed in an extruding line and, in-line, receive the pipes, or the pieces of cut pipes, to be processed.

The majority of belling machines currently used make the bell with the hot forming process and, for this purpose, they are equipped with at least one oven which heats the end of the pipe changing the end wall of the pipe to be shaped to a softened state.

The machine is also equipped with forming equipment which, by using a suitable mould, forms the heated end of the pipe into a bell shape.

The bell shaped on the mould is generally cooled inside the same forming equipment.

A sealing gasket is then inserted, often manually, in the annular cavity of the bell, to seal, in use, the connection between two successive pipes in the conduit.

There are also particular prior art automatic belling machines, which are frequently used in production lines for pipes made of PVC-U (commonly known as rigid, unplasticised PVC), that make an end bell with a gasket already fitted inside.

These belling machines make the bell with a system which is commonly known in the literature as the "Rieber system".

In the Rieber system, a metal spindle, known as a pad, is inserted at the end of the heated pipe, on which a gasket has been positioned beforehand, in a precise seat.

The seat, made in the pad, is suitably configured and sized according to the specific gasket to be located there.

Thus, during the first steps of forming the bell, the end of the pipe fits on the metal pad and the gasket. In practice, pad and gasket, together, constitute the mould for forming the bell.

Once the end of the pipe to be shaped has been fitted on the assembly comprising pad and gasket located on the pad, the end of the pipe is definitively shaped on this assembly, exerting either a negative pressure (which tends to create a vacuum inside the pipe fitted on the pad) and/or an overpressure on the outer surface of the pipe (for example with pressurised fluid, such as, for example, compressed air). After cooling has been completed, the gasket remains locked in the bell, becoming an integral part of it.

The gaskets used in the Rieber system are different from the elastomeric gaskets designed, in general, to be inserted in the grooved seat of a conventional bell, that is, a bell shaped with a cavity for the gasket to be installed after forming and cooling of the latter.

More specifically, the Rieber gaskets are characterised by a structure which incorporates in the elastomeric material an annular rigid part - metal or hard plastic - with specific functions of reinforcing and stiffening the gasket.

The Rieber system thus makes it possible to make, with a single machine, a belled pipe complete with gasket, wherein the gasket is locked in the bell shape at the end of the pipe.

This solution brings many advantages.

A first advantage is to avoid the manual insertion of the gaskets in their seats at the time of installation of the pipe, with the elimination of all the difficulties and uncertainties connected with the performance of this delicate operation on site, which is not necessarily performed by skilled personnel.

Another advantage linked with the above-mentioned prior art solution without doubt comprises the fact that it makes it possible to avoid equipping the production line with the equipment necessary to insert the gaskets in respective grooved seats after forming the bells. The operational and logistic advantages of the Rieber system are therefore evident, during both production of the pipe and installation of the conduit. Unfortunately this system is not free of drawbacks.

A first drawback linked with the Rieber system is that damage to the gasket during forming of the bell, or incorrect positioning of the gasket inside the bell, or imperfect adhesion of the gasket to the walls of the bell results in rejection of the entire pipe, since the gasket cannot be replaced in the pipe made with the Rieber system. Therefore, in the processes for forming the bell with Rieber system it appears absolutely essential to guarantee an optimum positioning and a perfect adhesion of the gasket relative to the bell.

Thus, relative to the conventional belling systems (in which the sealing gasket is inserted in the bell after forming and cooling the bell), the Rieber system requires, before inserting the pad in the ends of the pipe, that the pad is fitted with a gasket in the correct position in a specific seat on the pad.

The gasket must also be kept in this position during the entire process for making the bell.

More specifically, during the step of inserting the heated end of the pipe in the pad-gasket assembly, the gasket, if it has not been conveniently locked with suitable devices, pushed by the pipe forcibly fitted on the pad-gasket assembly, is moved by the pipe itself.

For this reason, the apparatus for forming the bell comprises an element that holds the gasket in its seat for the entire pipe inserting step; the element being removed at the end of this step.

The element is, typically, an annular element sliding on the pad which acts as a front contact element for the gasket in the pipe inserting step.

During insertion, the pipe rises onto the gasket and onto the annular element which retains the gasket. After this step, the annular element is withdrawn, allowing the pipe to envelop the outer surface of the gasket and the part of the pad that shapes the end of the bell. Therefore, with the above-mentioned annular element in a withdrawn position and disengaged from the pipe, the step of shaping the bell by the above-mentioned negative pressure inside the pipe and/or overpressure on the outer surface of the pipe can be started.

According to an alternative method to that just described above, specific devices comprising small withdrawable inserts inside the pad are also used to lock the gasket during the step for inserting the pipe on the pad. The inserts, in the extracted position, protrude from the outer surface of the pad making an abutment for the gasket. When the step of inserting the pipe in the pad-gasket assembly has been completed, before starting the step of shaping the bell, the inserts withdraw inside the pad.

Significant examples of variants of "Rieber" type gaskets and some devices for retaining the gasket in position on the pad are illustrated and described in patent document US 4 723 905.

Even more widespread is the use of PVC-U (unplasticised polyvinyl chloride) for making pipes for delivering fluids where there are relatively high operating pressures.

The dimensional features relating to diameters and wall thicknesses of pipes to be used in these pipelines are regulated by technical standards. These standards have standardised the dimensions of the pipes used for the production of pipelines for certain maximum nominal operating pressures. In short, as the operating pressure increases, the minimum dimension of the pipe wall thickness increases, for the same diameter. The process of forming the bell with the Rieber system applied to PVC-U pipes with a large wall thickness, which are typically pipes intended to be used in pipelines for operating pressures up to 16 bar or 20 bar, found through experimentation critical situations that would not be found in the processing of the pipes with a smaller wall thickness.

It should be noted that for the same external diameter of the pipe being processed and type of bell, the forming apparatus is not changed in the Rieber system with changes to the wall thickness of the pipe, since the bell is defined by its internal dimensions which remain the same whatever the wall thickness of the pipe. In effect, the "mould", comprising the pad-gasket assembly, positively defines the internal dimensions of the bell. With changes to the thickness of the pipe, only the tapered end of the pad may, possibly, require modification to adapt it to the different internal diameter of the pipe being processed.

It should also be noted that the material which is shaped like a bell is in a hot softened state and for the same state of softening the increase in the wall thickness makes it more difficult to shape the bell against zones of the pad-gasket where there are bends and curves. More specifically, the curved shape of the bell is critical in the zone connecting the front end of the gasket and the cylindrical wall of the pad.

If the wall of the formed bell does not follow this connecting zone, a detachment will obviously be created between the internal pipe wall and the gasket.

This detachment, even if limited and partial, may make the pipe with the integrated bell unsuitable for use since, for example, contaminating sand and/or solid particles may be accidentally introduced into the detachment zone, which, during the step of inserting the pipe for making a conduit, may damage the gasket and adversely affect the efficiency of the joint seal.

To overcome this problem, one technical solution is to accentuate the state of softening of the material. However, this results in longer heating and cooling times with a consequent increase in operating costs and slower production speeds. Moreover, by accentuating the softening of the pipe, the step of forced insertion of the pipe in the pad-gasket assembly becomes more difficult, if not impossible, since with the increase in temperature the mechanical strength of the pipe wall decreases and can become insufficient to withstand without collapse the axial compression forces which occur during the step of forced insertion of the pipe in the pad-gasket assembly. Even if the step of inserting the pipe in the pad-gasket assemble is feasible, due to the fact that the pipe wall thickness is never perfectly uniform, the increase in the state of softening promotes the occurrence of surface and shape defects for the bell; more specifically, the edge of the formed bell may not lie in a plane perpendicular to the longitudinal axis of the pipe.

In conclusion, the technical solution of accentuating the softening of the pipe is not able to overcome the problem highlighted and, especially for small diameter pipes and in very long types of bells, it can introduce further drawbacks.

Another technical solution considered to overcome the above-mentioned problem is that of identifying and producing different configurations of gaskets and/or shapes of the gasket seats in the pad; these are specific configurations only suitable for pipes with a large thickness. It is evident that this solution would be very onerous since the bell forming apparatus would no longer be unique for all the planned thicknesses, but would need to be changed over with a change to the thickness of the pipe to be produced. Document US 6,033,617 shows a knowm method for belling pipes made of thermoplastic material.

The aim of this invention is to overcome the above-mentioned drawbacks by providing a method for belling pipes made of thermoplastic material which allows the production of end bells with integrated gaskets in a effective manner also for a pipes of large thickness and which is at the same time inexpensive and practical and easy to use.

Another aim of this invention is to provide a device which actuate the above-mentioned method in an efficient manner, without requiring the use of different forming apparatuses and/or gaskets with the increase in thickness of the pipe to be processed.

Accordingly, this invention achieves those aims with a belling method and a belling device comprising the technical features described in one or more of the appended claims.

The technical features of the invention, with reference to the above aims, are clearly described in the claims below and its advantages are more apparent from the detailed description which follows, with reference to the accompanying drawings which illustrate a preferred, no-limiting example embodiment of it, and in which:
- Figure 1 is a schematic view with some parts in cross section of a detail of a bell made on a pipe made of thermoplastic material with prior art methods;
- Figure 2 is a schematic side elevation view with some parts in cross section of a first step of the belling method according to this invention;
- Figures 3 to 8 are respective schematic side elevation views with some parts in cross section of different steps of the method according to this invention.

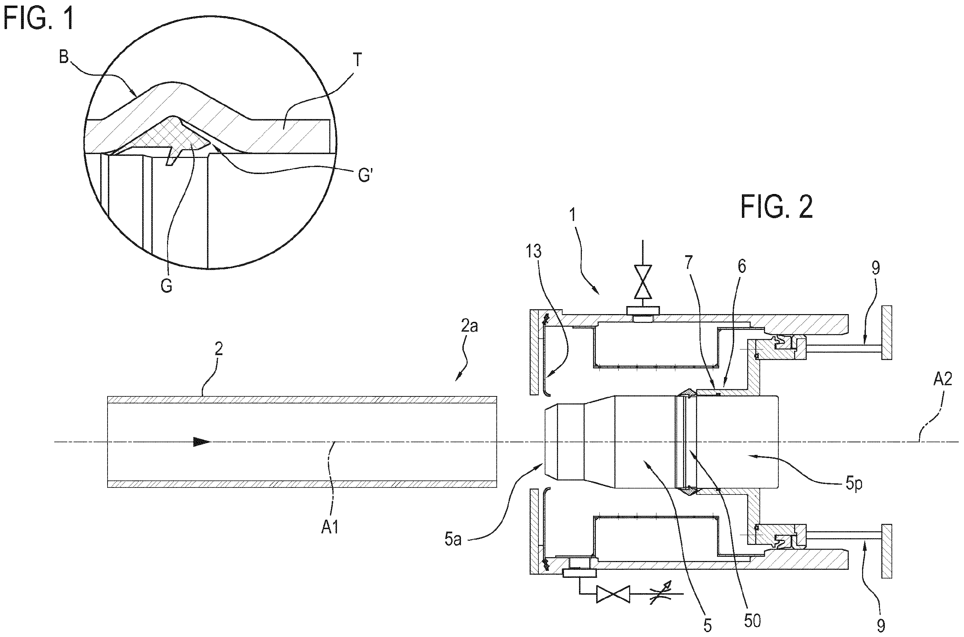

Figure 1 illustrates, in a respective cross section, a portion of a bell end B made on a pipe T made of thermoplastic material according to the Rieber system with prior art methods. The bell B therefore already incorporates a gasket G during the step of forming the bell.

Figure 1 shows one of the drawbacks referred to in the introductory part of this text: the presence of a detachment between the front part G' of the gasket and the overlying wall of the bell B. The space formed by this detachment collects unwanted deposits of material such as sand, soil, dirt, etc., such as to adversely affect the correct operation of the gasket and, consequently, the effectiveness of the connection between two successive pieces of pipe.

Figure 2 illustrates a first step of the method according to this invention for belling pipes made of thermoplastic material.

Figures 2 to 8 schematically show a belling device which is also made according to this invention.

With reference to Figure 1, the numeral 1 denotes in its entirety a device for belling pipes 2 made of thermoplastic material.

In this description, the numeral 2 will be used to refer without distinction to pipes or pieces of pipe.

The belling device 1 is shown in the accompanying drawings in its main basic elements necessary for understanding this invention.

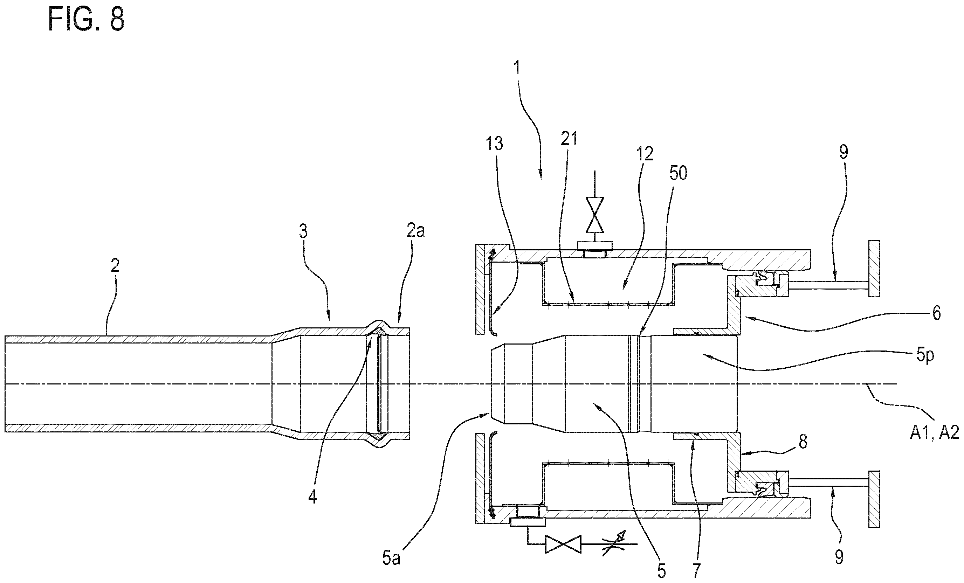

Figure 8 shows a piece of pipe 2 on which, at its end portion 2a, there is a bell 3, made using the device 1, in which an annular gasket 4 is stably seated.

The pipe 2 has a respective longitudinal central axis of extension A1.

The wide "bell" shape of the end portion 2a serves, as mentioned, to connect together in succession the two adjacent pipes 2 for forming a conduit.

With reference to Figure 1, the device 1 comprises a forming pad 5 designed to deform the above-mentioned end portion 2a of the pipe 2 made of thermoplastic material into a bell shape.

The pad 5, of a substantially known type, has an axially symmetric shape about a respective central axis A2, and has a tapered front part 5a, to facilitate insertion of the pad 5 inside the pipe 2, and a substantially cylindrical rear part 5p.

Means for supporting the pad, of known type, are not illustrated in the accompanying drawings.

As shown in Figure 2, an annular gasket 4 is positioned on the pad 5, in a predetermined position close to its rear cylindrical part 2p.

The gasket 4 is located in a respective seat 50 formed on the pad 5.

The belling device 1 according to this invention also comprises heating means, of known type and not described here, designed to heat the end portion 2a of the pipe 2 to a predetermined temperature designed to allow the deformation necessary for forming the bell.

In another prior art manner, the device 1 comprises drive means, not illustrated, designed to move relative to each other the above-mentioned end portion 2a of the pipe 2 and the pad 5, towards each other in the direction of the central longitudinal axis A1 of the pipe 2.

As shown in Figure 2, the belling device 1 comprises an annular element 6 fitted to and sliding on the above-mentioned rear cylindrical part 5p of the pad 5 and designed to move relative to the pad 5 in the direction of its axis A2, to adopt different reciprocal positions described in more detail below. The annular element 6 has a first cylindrical portion 7 fitted on the rear part 5p of the pad, a flange 8 supporting the cylindrical portion 7, and a plurality of actuating means 9, designed to slide the above-mentioned cylindrical portion 7 relative to the pad 5.

Advantageously, the actuating means 9 are pneumatic or hydraulic.

The movement of the cylindrical portion 7 on the pad 5 is advantageously telescopic.

The device 1 comprises suction means, not illustrated in detail, designed to generate a suction flow in the proximity of the seat 50 of the gasket 4 formed on the pad 5.

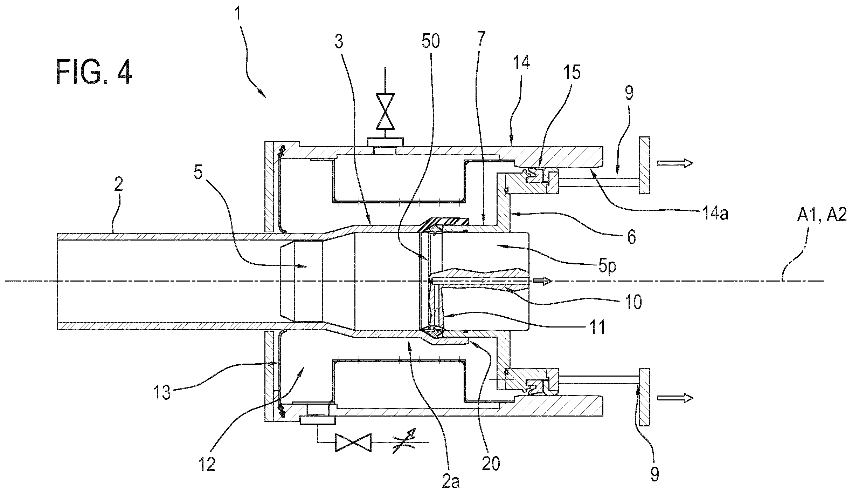

As shown in Figures 4, 5 and 6, the above-mentioned suction means comprise a central channel 10 formed in the pad 5 and a plurality of peripheral channels 11, of which only one is illustrated in the above-mentioned drawings.

The peripheral channels 11 have a radial extension and originate from the central channel 10.

The central channel 10 is placed in fluid communication with a suction device not illustrated.

The radial channels 11 lead to the outer surface of the pad 5 at the seat 50 of the gasket 4 and are designed to exert a suction action on the gasket 4.

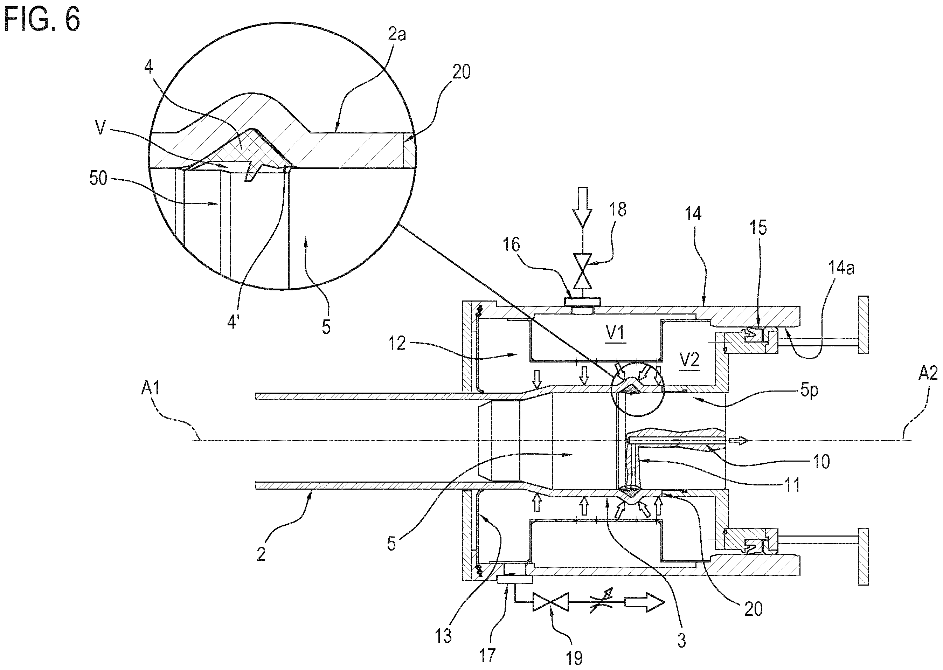

As shown in Figure 6 in the circled, enlarged detail, at the seat 50, between the gasket 4 and the outer surface of the pad 5 there is a space V and it is actually in this space V that the radial channels 11 contribute to determining a negative pressure.

The device 1 also comprises a control unit, not illustrated, which actuates the operating steps of the device 1 as described in this text.

Figure 2 shows an initial configuration relative to the actuation of the method according to this invention, wherein the pipe 2 to be belled is positioned at the front of the device 1, with its central axis A1 positioned aligned with the central axis A2 of the pad 5.

The annular element 6 adopts its first most advanced configuration in which it is in contact with the annular gasket 4 for retaining it in position in its seat 50.

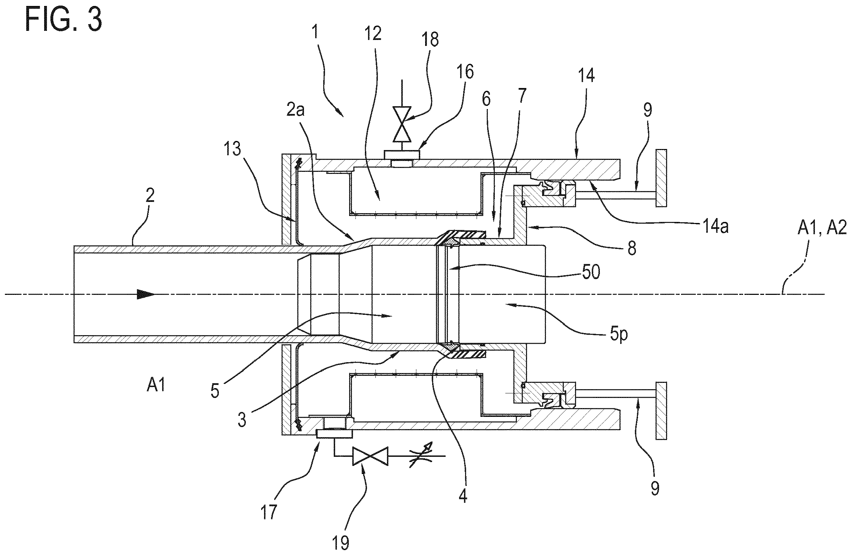

Figure 3 shows the end portion 2a of the pipe 2 which, after heating to a predetermined deformation temperature, has been moved forward towards the pad 5 on which it is fitted.

More specifically, the relative movement between the pipe 2 and pad 5 imparted by the above-mentioned actuator means, not illustrated, is such as to cause a partial covering over of the end portion 2a of the pipe on the cylindrical portion 7 of the annular element 6.

In other words, using the guide offered by the conical shape of the gasket 4, the end portion 2a covers over the gasket 4, with a consequent deformation, and partly encloses the above-mentioned cylindrical portion 7 of the annular element 6.

During the described step of inserting the end portion 2a on the pad 5, the action of retaining the gasket 4 applied by the annular element 6 in its first most advanced configuration is essential, precisely to prevent the gasket from being pushed away from its seat 50.

As shown in Figure 4, the above-mentioned suction means, only partly illustrated, are activated, one function of which is to hold the annular gasket 4 adherent to the pad 5 in its seat 50.

Another function of the suction means which determine the above-mentioned negative pressure in the space V is that of making the wall of the pipe 2 (which is in a substantially deformed softened state) adhere to the annular gasket 4.

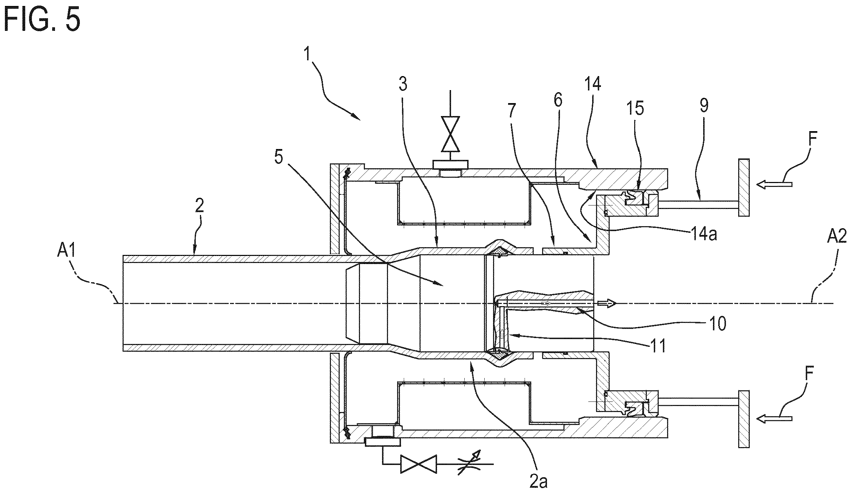

Figure 5 shows, with reference to the annular element 6, a second withdrawn configuration of detachment both from the annular gasket 4 and from the end portion 2a of the pipe.

In the passage between the first advanced configuration and the second withdrawn configuration of the annular element 6, illustrated, respectively, in Figures 4 and 5, the cylindrical portion 7 is pulled out from the end portion 2a of the pipe 2 which can thus adhere to the rear cylindrical part 5p of the pad 5.

The movement of the annular element 6 from its first to its second configuration is achieved by means of the above-mentioned actuating means 9.

The retaining action of the gasket 4 achieved by the suction units is important during the passage between the above-mentioned first and second configurations of the annular element 6, so as to avoid, at the moment of removing the cylindrical portion 7 of the annular element 6, that the stresses present in the material of the pipe 2 and/or a certain elastic return of the material causes a movement of the gasket 4 from its seat 50. Starting from its second most withdrawn configuration of detachment illustrated in Figure 5, the annular element 6 is driven by the actuating means 9 to move, relative to the pad 5, in the direction of the arrows F.

As a result of this movement, the annular element 6 reaches a third, intermediate configuration, shown in Figure 6, wherein its cylindrical portion 7 is placed frontally in contact with an end face 20 of the end portion 2a of the pipe 2.

With the annular element 6 in the contact position described above, the actuating means 9 are activated to exert an axial pushing action on the end face 20 of the portion. This axial pushing action on the pipe 2, exerted by the actuating means 9 through the annular element 6, constitutes a combined bending and compressive stress.

Advantageously, during the axial pushing step, the above-mentioned suction means are kept active in such a way as to exert their main function of retaining the annular gasket 4 in the respective seat 50, preventing the pushing action from causing a movement.

The above-mentioned action of pushing the material of the end portion 2a of the pipe 2 towards the front face of the gasket makes it possible to optimize the adhesion of the wall of the pipe 2 on this surface of the gasket.

As shown in Figures 3 to 7, with the portion 2a fitted on the pad 5, a fluid-tight annular chamber 12 is formed in the belling device 1.

The above-mentioned annular chamber 12 is formed in particular by a front wall 13, by the outer surface of the end portion 2a of the pipe 2, by the annular element 6, and by a cylindrical outer wall 14 of the device 1.

In order to maintain the fluid-tight seal inside the chamber 12 even during the movement of the annular element 6 between its different configurations, the chamber has a perimeter gasket 15 which can slide on an inner face 14a of the cylindrical outer wall 14.

The device 1 also comprises an inlet opening 16 and an outlet opening 17. The device 1 also comprises valve means 18, 19 which adjust the flow of air inside the annular chamber 12, through the above-mentioned inlet and outlet openings 16, 17.

The device 1 also comprises a source of pressurised fluid, not illustrated, connected to the above-mentioned inlet opening 16 of the annular chamber 12 for feeding the pressurised fluid and generating an overpressure in the chamber.

The above-mentioned source of pressurised fluid, not illustrated, together with the openings 16, 17 and the valve means 18, 19, constitute pneumatic means designed to generate an overpressure inside the annular chamber 12. The term "pneumatic means" is used since the pressurised fluid introduced inside the annular chamber 12 is advantageously air.

With the configuration shown in Figure 6, the effect of the overpressure established inside the annular chamber 12 (schematically represented by a plurality of arrows incident on the outer face of the bell 3 being formed) is that the end portion 2a of the pipe 2 closely follows the shape made by the assembly of the pad 5 and the gasket 4.

In short, the deforming action of the external pressure acting on the portion 2a shapes the bell 3 definitively against the pad 5, against the gasket 4 and against the annular element 6.

Advantageously, with the process described above the shape of the bell 3 is obtained, at the gasket 4, as illustrated in particular in the circle in Figure 6, that is to say, it minimises the harmful spaces highlighted in Figure 1 with reference to the state of the art.

It has been found experimentally that optimum results are obtained by activating the overpressure action only after having stopped the axial pushing action exerted by the annular element 6 against the end face 20 of the end portion 2a of the pipe 2.

The end face 20 of the end portion 2a forms an end edge of the portion 2a.

It has been found experimentally that after the above-mentioned overpressure has been set up inside the annular chamber 12, the suction action exerted on the gasket 4 is no longer significant and can therefore be interrupted.

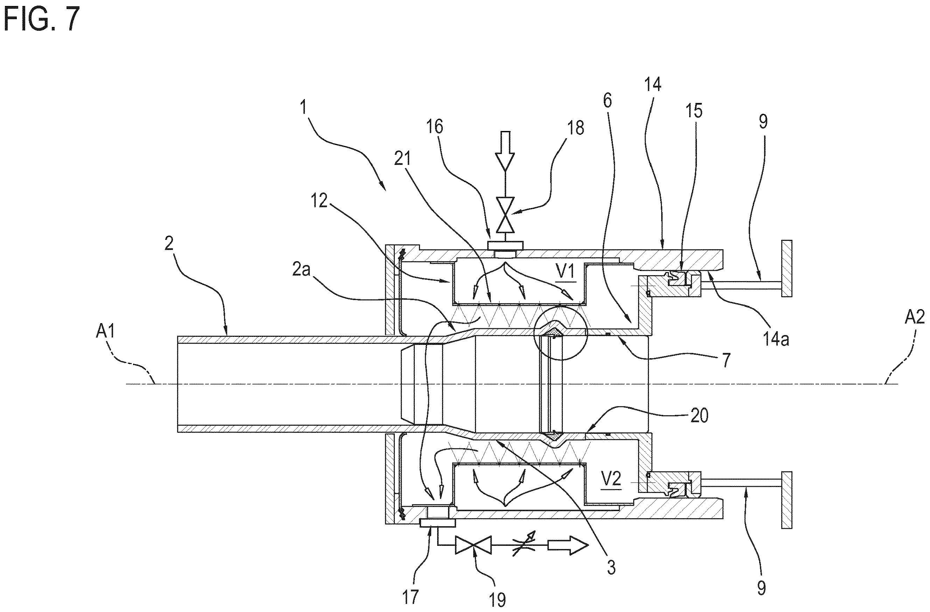

With reference to Figure 7, after setting up the overpressure inside the chamber 12, a step of stabilising the formed bell is necessary as well as a successive or simultaneous cooling step.

As shown in Figure 7, the device 1 comprises, inside the annular chamber 12, a cooling diffuser element 21.

The cooling diffuser element 21 extends circumferentially around the bell 3 being formed and has a plurality of holes designed to allow the generation of the same number of jets of cooling air on the bell 3.

Advantageously, by a suitable adjustment of the valve means 18, 19 a circulation of air is actuated inside the annular chamber 12, such as to generate a flow of cooling air which strikes the bell 3, whilst at the same time maintaining an overpressure inside the chamber.

In other words, the diffuser element 21 constitutes a separator which divides the annular chamber 12 into two different spaces V1, V2 in communication with each other through the above-mentioned plurality of holes. When the valve 19 is closed, the pressurised air fed through opening 16, as it cannot escape, causes an overpressure inside the chamber 12 without particular movements of fluid inside it between the two spaces V1, V2.

Alternatively, the partial opening of the valve 19 determines a flow of air from the opening 17 (that is, an emptying of the space V2) which, if suitably opposed by a continuous flow of pressurised air in the space V1, through the opening 16, favours a transfer of air from the space V1 to the volume V2, whilst maintaining an overpressure inside the chamber 12. The cooling can be achieved by cooling fluids, for example air and/or precooled water, blown and/or sprayed towards the outer surface of the bell. Advantageously, as described above, the same compressed air used for deforming the bell 3 can be used to perform the cooling function. Therefore, according to this preferred embodiment of the method according to this invention, the external pressure on the bell 3 is simultaneous with the gradual cooling the bell 3.

As shown in Figure 8, after cooling the bell 3, the piece of pipe 2 is removed from the pad 5 using the above-mentioned actuating means, not illustrated.

Figure 8 shows that the gasket 4 is integral with the bell 3 formed and, therefore, with the removal of this from the pad 5, the annular gasket 4 is also removed and the seat 50 remains unoccupied.

Suitable means of known type, not illustrated, insert on the pad 5, at the seat 50, a new gasket 4 for a new piece of pipe 2 to be belled.

In short, the belling method according to this invention comprises adding to the deforming actions of a fluid type a suitable deforming action of a mechanical type, generated by the annular element 6.

Advantageously, the annular element 6, suitably sized, also performs the function of contact of the annular gasket 4 in the pad 5, thus avoiding the need for introducing into the belling device a further mechanical member and relative movement system.

The method according to this invention advantageously comprises, therefore, the presence of three deforming actions: a suction action on the inner surface of the bell 3 being formed, an external pressure of compressed air on the outer surface of the bell 3 being formed, and a mechanical action by the annular element 6 which acts on the end edge (end face 20) of the bell 3 being formed.

One advantage of the method according to this invention is therefore to provide a perfect adhesion of the wall of the pipe 2 to the gasket 4; more specifically, the wall adheres and integrates perfectly to the front edge 4' (shown in Figure 6) of the gasket 4 even when processing pipes 2 with very thick walls.

The correct adhesion of the bell 3 to the gasket 4 is accomplished without increasing the softening of the material, so without increasing the heating times or the heating power, with obvious advantages in terms of production capacity and energy consumption of the belling device. Moreover, an increased heating of the pipe 2, as well as adversely affecting times and energy consumption during the softening step, would also result in a greater quantity of heat to be removed during the cooling step with the need to increase the cooling times and/or the cooling power. Another advantage of the method according to this invention is to provide, thanks to the pushing of the annular element 6, an end face 20 of the bell 3, lying in a plane perpendicular to the axis A1 of the pipe; thus also guaranteeing a certain reference that allows, when forming conduits, the correct insertion of the pipe 2 into the bell 3 of the next pipe 2 to be controlled. In effect, the pipes, on the opposite sides without the bell, are normally marked with a line indicating the reference position which the end of the bell must reach when a pipe is inserted in the bell of another pipe during installation of the conduit.

Thanks to the concurrent nature of the various deforming actions, the times for stabilising the shape of the bell 3 before actuating the cooling step are shorter than those of the conventional forming systems which use the Rieber system; the working cycles times are therefore shorter with a higher productivity of the belling device.

The cooling may be advantageously made concurrent, entirely or partly, with the deforming action of the outer pressure on the surface of the bell with the effect of making the working cycle times shorter and therefore obtaining a higher productivity from the device.

Advantageously, the annular element 6, with the dual function of contact of the gasket 4 and shaping of the end face 20 of the bell, may be heated to a temperature close to or higher than the vitreous transition temperature of the PVC-U, that is greater than approximately 75°C. In that way, the surface quality is improved of the surfaces of the bell 3 which are in contact with the surfaces of the annular element 6 during the forming process.

## Claims

1. A method for belling pipes (2) made of thermoplastic material comprising the following steps:
- preparing a forming pad (5) designed to deform into the shape of a bell (3) an end portion (2a) of a pipe (2) made of thermoplastic material, the pad (5) having an axially symmetric shape about a respective central axis (A2), and having a tapered front part (5a), to facilitate insertion of the pad (5) inside the pipe (2), and a substantially cylindrical rear part (5p),
- preparing an annular gasket (4) on the pad (5) in a predetermined position (50), the annular gasket (4) being designed to be stably positioned in the bell (3) to be formed,
- preparing an annular element (6) fitted to and sliding on the rear cylindrical part (5p) of said pad (5) and designed to move relative to said pad (5) in the direction of its axis (A2), to adopt different reciprocal positions, said annular element (6) having a first cylindrical portion (7) fitted on said rear part (5p) of the pad (5), a flange (8) supporting the cylindrical portion (7), and a plurality of actuating means (9), designed to slide the above-mentioned cylindrical portion (7) relative to the pad (5),
- heating the end portion (2a) to a predetermined temperature designed to allow the deformation,
- moving relative to each other the end portion (2a) of the pipe (2) and the pad (5), towards each other in the direction of a longitudinal central axis (A1) of the pipe (2), for fitting the end portion (2a) on the assembly of the pad (5) and the annular gasket (4),
- retaining the annular gasket (4) in its predetermined position (50) during the relative movement of the end portion (2a) and pad (5),
- generating a negative pressure at a space (V) between the pad (5) and the end portion (2a) of the pipe (2) at the annular gasket (4),
- moving the annular element (6) relative to the pad (5) so that the annular element reaches a contact position in which its cylindrical portion (7) is placed frontally in contact with an end face (20) of the end portion (2a) of the pipe (2),
- forcing an end edge (20) of the portion (2a) against the gasket (4), **characterised in that** the step of forcing is actuated by activating the actuating means (9), with the annular element in the contact position, so that the actuating means (9) exert an axial pushing action on an end face of said portion (2a) towards a front face (4') of the gasket (4) to optimize the adhesion of the wall of the pipe (2) on this surface of the gasket (4), said axial pushing action on the pipe (2), being exerted by said actuating means (9) through the annular element (6), constituting a combined bending and compressive stress.

2. The belling method according to claim 1, **characterised in that** it comprises a step of overpressurising a predetermined space (V1, V2) surrounding the end portion (2a) of the pipe (2) in such a way that the portion (2a) closely follows the shape made by the assembly of the pad (5) and the gasket (4).

3. The belling method according to claim 2, **characterised in that** the step of overpressurising a predetermined space (V1, V2) surrounding the end portion (2a) of the pipe (2) is actuated by feeding compressed air into a closed chamber (12) forming the predetermined space (V1, V2).

4. The belling method according to claims 2 and 3, **characterised in that** it comprises a step of cooling the end portion (2a) of the pipe (2) fitted on the assembly of the pad (5) and the annular gasket (4).

5. The belling method according to claim 4, **characterised in that** the step of cooling the end portion (2a) of the pipe (2) is actuated at least partly simultaneously with the step of overpressurising a predetermined space (V1, V2) surrounding the end portion (2a).

6. The belling method according to claims 4 and 5, **characterised in that** the step of cooling the end portion (2a) is actuated by circulating compressed air inside the predetermined space (V1, V2).

7. The belling method according to any one of the claims from 1 to 6, **characterised in that** the step of retaining the annular gasket (4) in its predetermined position (50) during the relative movement of the end portion (2a) of the pipe (2) and pad (5) is actuated by an annular element (6) fitted on the pad (5) and designed to move relative to it in the direction of the longitudinal central axis (A1) of the pipe (2).

8. The belling method according to claim 7, **characterised in that** the steps of retaining the annular gasket (4) in its predetermined position (50) and of forcing the end edge (20) of the end portion (2a) against the gasket (4) are both actuated by a same annular element (6) fitted on the pad (5) and movable relative to it.

9. A device for belling pipes (2) made of thermoplastic material comprising:
- a forming pad (5) to deform into the shape of a bell (3) an end portion (2a) of a pipe (2) made of thermoplastic material, the pad (5) having an axially symmetric shape,
- an annular gasket (4) designed to be positioned on the pad (5) in a predetermined position (50) to be transferred stably into the bell (3) to be formed,
- means of heating the end portion (2a) to a predetermined temperature designed to allow the deformation,
- actuator means designed to move relative to each other the end portion (2a) of the pipe (2) and the pad (5), towards each other in the direction of a longitudinal central axis (A1) of the pipe (2), for fitting the end portion (2a) on the assembly of the pad (5) and the annular gasket (4),
- suction means for generating a negative pressure inside a space (V) between the pad (5) and the end portion (2a) of the pipe (2) at the annular gasket (4),
- an annular element (6) which can slide on one section (5p) of the pad (5) to move along the section (5p) in the direction of the longitudinal central axis (A1), the annular element (6) being designed to adopt a first most advanced configuration in which there is in contact with the annular gasket (4) for retaining it in its position (50), a second most withdrawn configuration of detachment from the gasket (4) and from the end portion (2a) of the pipe (2), and a third, intermediate configuration where it is at least partly in contact with an end edge (20) of the end portion (2a) of the pipe (2), **characterised in that** it comprises actuating means (9) for moving the annular element (6) at least between its three configurations and to exert a compressive action of the end edge (20) of the pipe against the gasket (4) when the annular element (60) is in its third intermediate configuration.

10. The device according to claim 9, wherein there is a fluid-tight annular chamber (12) surrounding the end portion (2a) of the pipe (2) fitted on the pad (5), **characterised in that** it comprises pneumatic means (16, 17, 18, 19) designed to create an overpressure in the chamber (12), in such a way that the end portion (2a) closely follows the shape made by the assembly of the pad (5) and the gasket (4).

11. The device according to any one of the claims 9 and 10, comprising means (21) for cooling the end portion (2a) of the pipe (2) fitted on the pad (5), **characterised in that** the cooling means (16, 17, 18, 19, 21) comprise valve means (18, 19) designed to create a circulation of air inside the annular chamber (12), while at the same time keeping the annular chamber (12) overpressurised.

## Patentansprüche

1. Verfahren zur Muffenformung auf Rohren (2) aus thermoplastischem Material, umfassend die folgenden Schritte:
- Vorbereiten eines Formkissens (5), das ausgelegt ist, um einen Endabschnitt (2a) eines Rohrs (2) aus thermoplastischem Material in die Form einer Muffe (3) zu verformen, wobei das Kissen (5) eine axialsymmetrische Form um eine jeweilige Mittelachse (A2) aufweist und aufweisend einen sich verjüngenden Vorderteil (5a), um das Einführen des Kissens (5) in das Rohr (2) zu erleichtern, und einen im Wesentlichen zylindrischen Hinterteil (5p),
- Vorbereiten einer ringförmigen Dichtung (4) an dem Kissen (5) in einer vorbestimmten Position (50), wobei die ringförmige Dichtung (4) so ausgelegt ist, dass sie stabil in der zu formenden Muffe (3) positioniert ist,
- Vorbereiten eines ringförmigen Elements (6), das an dem hinteren zylindrischen Teil (5p) des Kissens (5) angebracht ist und auf diesem gleitet und so ausgelegt ist, dass es sich relativ zu dem Kissen (5) in Richtung seiner Achse (A2) bewegt, um verschiedene wechselseitige Positionen einzunehmen, wobei das ringförmige Element (6) einen ersten zylindrischen Abschnitt (7), der an dem hinteren Teil (5p) des Kissens (5) angebracht ist, einen Flansch (8), der den zylindrischen Abschnitt (7) trägt, und eine Vielzahl an Betätigungsmitteln (9) aufweist, die so ausgelegt sind, dass sie den oben erwähnten zylindrischen Abschnitt (7) relativ zu dem Kissen (5) schieben,
- Erhitzen des Endabschnitts (2a) auf eine vorbestimmte Temperatur, die ausgelegt ist, um die Verformung zu ermöglichen,
- Bewegen des Endabschnitts (2a) des Rohrs (2) und des Kissens (5) relativ zueinander, in Richtung einer Längsmittelachse (A1) des Rohrs (2) zueinander, um den Endabschnitt (2a) an der Anordnung des Kissens (5) und der ringförmigen Dichtung (4) anzubringen,
- Halten der ringförmigen Dichtung (4) in ihrer vorbestimmten Position (50) während der Relativbewegung des Endabschnitts (2a) und des Kissens (5),
- Erzeugen eines Unterdrucks in einem Raum (V) zwischen dem Kissen (5) und dem Endabschnitt (2a) des Rohrs (2) an der ringförmigen Dichtung (4),
- Bewegen des ringförmigen Elements (6) relativ zum Kissen (5), so dass das ringförmige Element eine Kontaktposition erreicht, in der sein zylindrischer Abschnitt (7) frontal in Kontakt mit einer Endfläche (20) des Endabschnitts (2a) des Rohrs (2) platziert ist,
- Forcieren einer Endkante (20) des Abschnitts (2a) gegen die Dichtung (4), **dadurch gekennzeichnet, dass** der Schritt zum Forcieren durch Aktivieren der Betätigungsmittel (9) mit dem ringförmigen Element in der Kontaktposition durchgeführt wird, so dass die Betätigungsmittel (9) eine axiale Druckwirkung auf eine Endfläche des Abschnitts (2a) in Richtung einer Vorderfläche (4') der Dichtung (4) ausüben, um die Haftung der Wand des Rohrs (2) auf der Oberfläche der Dichtung (4) zu optimieren, wobei die axiale Druckwirkung auf das Rohr (2) durch die Betätigungsmittel (9) durch das ringförmige Element (6) ausgeübt wird, was eine kombinierte Biege- und Druckspannung darstellt.

2. Muffenformungsverfahren nach Anspruch 1, **dadurch gekennzeichnet, dass** es einen Schritt zum Überdrucken eines vorbestimmten Raums (V1, V2) umfasst, der den Endabschnitt (2a) des Rohrs (2) derart umgibt, dass der Abschnitt (2a) die Form, die durch die Anordnung des Kissens (5) und der Dichtung (4) gebildet wird, genau verfolgt.

3. Muffenformungsverfahren nach Anspruch 2, **dadurch gekennzeichnet, dass** der Schritt zum Überdrucken eines vorbestimmten Raums (V1, V2), der den Endabschnitt (2a) des Rohrs (2) umgibt, durch Zuführen von Druckluft in eine geschlossene Kammer (12), die den vorbestimmten Raum (V1, V2) formt, durchgeführt wird.

4. Muffenformungsverfahren nach den Ansprüchen 2 und 3, **dadurch gekennzeichnet, dass** es einen Schritt zum Abkühlen des Endabschnitts (2a) des Rohrs (2) umfasst, der an der Anordnung des Kissens (5) und der ringförmigen Dichtung (4) angebracht ist.

5. Muffenformungsverfahren nach Anspruch 4, **dadurch gekennzeichnet, dass** der Schritt zum Abkühlen des Endabschnitts (2a) des Rohrs (2) mindestens teilweise gleichzeitig mit dem Schritt zum Überdrucken eines vorbestimmten Raums (V1, V2), der den Endabschnitt (2a) umgibt, durchgeführt wird.

6. Muffenformungsverfahren nach den Ansprüchen 4 und 5, **dadurch gekennzeichnet, dass** der Schritt zum Abkühlen des Endabschnitts (2a) durch Zirkulieren von Druckluft innerhalb des vorbestimmten Raums (V1, V2) durchgeführt wird.

7. Muffenformungsverfahren nach einem der Ansprüche 1 bis 6, **dadurch gekennzeichnet, dass** der Schritt zum Halten der ringförmigen Dichtung (4) in ihrer vorbestimmten Position (50) während der Relativbewegung des Endabschnitts (2a) des Rohrs (2) und des Kissens (5) durch ein ringförmiges Element (6) durchgeführt wird, das an dem Kissen (5) angebracht ist und so ausgelegt ist, dass es sich relativ dazu in Richtung der Längsmittelachse (A1) des Rohrs (2) bewegt.

8. Muffenformungsverfahren nach Anspruch 7, **dadurch gekennzeichnet, dass** die Schritte zum Halten der ringförmigen Dichtung (4) in ihrer vorbestimmten Position (50) und zum Forcieren der Endkante (20) des Endabschnitts (2a) gegen die Dichtung (4) beide durch dasselbe ringförmige Element (6) durchgeführt werden, das an dem Kissen (5) angebracht und relativ dazu beweglich ist.

9. Vorrichtung zur Muffenformung auf Rohren (2) aus thermoplastischem Material, umfassend:
- ein Formkissen (5), um einen Endabschnitt (2a) eines Rohrs (2) aus thermoplastischem Material in die Form einer Muffe (3) zu verformen, wobei das Kissen (5) eine axialsymmetrische Form aufweist,
- eine ringförmige Dichtung (4), die so ausgelegt ist, dass sie in einer vorbestimmten Position (50) auf dem Kissen (5) positioniert ist, um stabil in die zu formende Muffe (3) überführt zu werden,
- Mittel zum Erhitzen des Endabschnitts (2a) auf eine vorbestimmte Temperatur, die ausgelegt ist, um die Verformung zu ermöglichen,
- Aktuatormittel, die zum Bewegen des Endabschnitts (2a) des Rohrs (2) und des Kissens (5) relativ zueinander, in Richtung einer Längsmittelachse (A1) des Rohrs (2) zueinander ausgelegt sind, um den Endabschnitt (2a) an der Anordnung des Kissens (5) und der ringförmigen Dichtung (4) anzubringen,
- Saugmittel zur Erzeugung eines Unterdrucks innerhalb eines Raums (V) zwischen dem Kissen (5) und dem Endabschnitt (2a) des Rohrs (2) an der ringförmigen Dichtung (4),
- ein ringförmiges Element (6), das auf einem Teilstück (5p) des Kissens (5) gleiten kann, um sich entlang des Teilstücks (5p) in Richtung der Längsmittelachse (A1) zu bewegen, wobei das ringförmige Element (6) ausgelegt ist, um eine erste am weitesten vorgeschobene Konfiguration, bei der Kontakt mit der ringförmigen Dichtung (4) besteht, um sie in deren Position (50) zu halten, eine zweite am weitesten zurückgezogene Konfiguration zur Ablösung von der Dichtung (4) und vom Endabschnitt (2a) des Rohrs (2) und eine dritte Zwischenkonfiguration einzunehmen, bei der es mindestens teilweise mit einer Endkante (20) des Endabschnitts (2a) des Rohrs (2) in Kontakt steht, **dadurch gekennzeichnet, dass** es Betätigungsmittel (9) zum Bewegen des ringförmigen Elements (6) mindestens zwischen seinen drei Konfigurationen und zum Ausüben einer Druckwirkung der Endkante (20) des Rohrs gegen die Dichtung (4), wenn sich das ringförmige Element (60) in seiner dritten Zwischenkonfiguration befindet, umfasst.

10. Vorrichtung nach Anspruch 9, wobei eine fluiddichte ringförmige Kammer (12) den Endabschnitt (2a) des Rohrs (2) umgibt, der an dem Kissen (5) angebracht ist, **dadurch gekennzeichnet, dass** sie pneumatische Mittel (16, 17, 18, 19) umfasst, die ausgelegt sind, um einen Überdruck in der Kammer (12) derart zu erzeugen, dass der Endabschnitt (2a) die Form, die durch die Anordnung des Kissens (5) und der Dichtung (4) gebildet wird, genau verfolgt.

11. Vorrichtung nach einem der Ansprüche 9 und 10, umfassend Mittel (21) zum Abkühlen des Endabschnitts (2a) des Rohrs (2), der an dem Kissen (5) angebracht ist, **dadurch gekennzeichnet, dass** die Kühlmittel (16, 17, 18, 19, 21) Ventilmittel (18, 19) umfassen, die ausgelegt sind, um eine Luftzirkulation innerhalb der ringförmigen Kammer (12) zu erzeugen, während gleichzeitig die ringförmige Kammer (12) unter Überdruck gehalten wird.

## Revendications

1. Procédé de tulipage de tuyaux (2) en matériau thermoplastique, comprenant les étapes suivantes :
- préparer un coussin de formage (5) conçu pour déformer en forme de tulipe (3) une partie terminale (2a) d'un tuyau (2) en matériau thermoplastique, le coussin (5) ayant une forme axialement symétrique, autour d'un axe central (A2) respectif, et comportant une partie antérieure (5a) conique pour faciliter l'introduction du coussin (5) à l'intérieur du tuyau (2), et une partie postérieure (5p) substantiellement cylindrique,
- préparer un joint annulaire (4) sur le coussin (5) dans une position (50) prédéterminée, le joint annulaire (4) étant conçu pour être positionné stablement dans la tulipe (3) à former,
- préparer un élément annulaire (6) monté et coulissant sur la partie cylindrique (5p) postérieure dudit coussin (5) et conçu pour se déplacer par rapport au dit coussin (5) dans la direction de son axe (A2) pour adopter différentes positions réciproques, ledit élément annulaire (6) comportant une première portion cylindrique (7) montée sur ladite partie postérieure (5p) du coussin (5), une bride (8) supportant la portion cylindrique (7), et une pluralité de moyens d'actionnement (9) conçus pour faire coulisser la portion cylindrique (7) susmentionnée par rapport au coussin (5),
- chauffer la partie terminale (2a) à une température prédéterminée conçue pour permettre la déformation,
- déplacer l'un par rapport à l'autre la partie terminale (2a) du tuyau (2) et le coussin (5) l'un vers l'autre dans la direction d'un axe central longitudinal (A1) du tuyau (2) pour fixer la partie terminale (2a) sur l'assemblage du coussin (5) et du joint annulaire (4),
- maintenir le joint annulaire (4) dans sa position (50) prédéterminée pendant le mouvement relatif de la partie terminale (2a) et du coussin (5),
- générer une pression négative en correspondance d'un espace (V) entre le coussin (5) et la partie terminale (2a) du tuyau (2) en correspondance du joint annulaire (4),
- déplacer l'élément annulaire (6) par rapport au coussin (5) de sorte que l'élément annulaire atteigne une position de contact dans laquelle sa portion cylindrique (7) est placée frontalement en contact avec une face d'extrémité (20) de la partie terminale (2a) du tuyau (2),
- forcer un bord d'extrémité (20) de la partie (2a) contre le joint (4), **caractérisé en ce que** l'étape de forçage est actionnée en activant les moyens d'actionnement (9), avec l'élément annulaire en position de contact, de sorte que les moyens d'actionnement (9) exercent une action de poussée axiale sur une face d'extrémité de ladite partie (2a) vers une face antérieure (4') du joint (4) pour optimiser l'adhérence de la paroi du tuyau (2) sur cette surface du joint (4), ladite action de poussée axiale sur le tuyau (2) étant exercée par lesdits moyens d'actionnement (9) à travers l'élément annulaire (6), constituant une contrainte combinée de flexion et de compression.

2. Procédé de tulipage selon la revendication 1, **caractérisé en ce qu'**il comprend une étape consistant à mettre en surpression un espace prédéterminé (V1, V2) entourant la partie terminale (2a) du tuyau (2) de telle manière que la partie (2a) suive étroitement la forme réalisée par l'assemblage du coussin (5) et du joint (4) .

3. Procédé de tulipage selon la revendication 2, **caractérisé en ce que** l'étape consistant à mettre en surpression un espace prédéterminé (V1, V2) entourant la partie terminale (2a) du tuyau (2) est actionnée en alimentant de l'air comprimé dans une chambre fermée (12) formant l'espace prédéterminé (V1, V2).

4. Procédé de tulipage selon les revendications 2 et 3, **caractérisé en ce qu'**il comprend une étape consistant à refroidir la partie terminale (2a) du tuyau (2) montée sur l'assemblage du coussin (5) et du joint annulaire (4) .

5. Procédé de tulipage selon la revendication 4, **caractérisé en ce que** l'étape consistant à refroidir la partie terminale (2a) du tuyau (2) est actionnée au moins partiellement simultanément à l'étape de surpression d'un espace prédéterminé (V1, V2) entourant la partie terminale (2a).

6. Procédé de tulipage selon les revendications 4 et 5, **caractérisé en ce que** l'étape consistant à refroidir la partie terminale (2a) est actionnée en faisant circuler de l'air comprimé à l'intérieur de l'espace prédéterminé (V1, V2).

7. Procédé de tulipage selon l'une quelconque des revendications 1 à 6, **caractérisé en ce que** l'étape consistant à maintenir le joint annulaire (4) dans sa position prédéterminée (50) pendant le mouvement relatif de la partie terminale (2a) du tuyau (2) et du coussin (5) est actionnée par un élément annulaire (6) monté sur le coussin (5) et conçu pour se déplacer par rapport à celui-ci dans la direction de l'axe central (A1) longitudinal du tuyau (2).

8. Procédé de tulipage selon la revendication 7, **caractérisé en ce que** les étapes consistant à maintenir le joint annulaire (4) dans sa position prédéterminée (50) et à forcer le bord d'extrémité (20) de la partie terminale (2a) contre le joint (4) sont toutes deux actionnées par un même élément annulaire (6) monté sur le coussin (5) et conçu pour se déplacer par rapport à celui-ci.

9. Dispositif de tulipage de tuyaux (2) en matériau thermoplastique, comprenant :
- un coussin de formage (5) servant à déformer en forme de tulipe (3) une partie terminale (2a) d'un tuyau (2) en matériau thermoplastique, le coussin (5) ayant une forme axialement symétrique,
- un joint annulaire (4) conçu pour être positionné sur le coussin (5) dans une position prédéterminée (50) pour être transféré stablement dans la tulipe (3) à former,
- des moyens de chauffage de la partie terminale (2a) à une température prédéterminée conçue pour permettre la déformation,
- des moyens d'actionnement conçus pour déplacer l'un par rapport à l'autre la partie terminale (2a) du tuyau (2) et le coussin (5) l'un vers l'autre dans la direction d'un axe central (A1) longitudinal du tuyau (2), pour fixer la partie terminale (2a) sur l'assemblage du coussin (5) et du joint annulaire (4),
- des moyens d'aspiration servant à générer une pression négative à l'intérieur d'un espace (V) entre le coussin (5) et la partie terminale (2a) du tuyau (2) en correspondance du joint annulaire (4),
- un élément annulaire (6) pouvant coulisser sur une section (5p) du coussin (5) pour se déplacer le long de la section (5p) dans la direction de l'axe central (A1) longitudinal, l'élément annulaire (6) étant conçu pour adopter une première configuration la plus avancée dans laquelle il se trouve en contact avec le joint annulaire (4) pour le maintenir dans sa position (50), une deuxième configuration la plus retirée de détachement du joint (4) et de la partie terminale (2a) du tuyau (2), et une troisième configuration intermédiaire où il se trouve au moins partiellement en contact avec un bord d'extrémité (20) de la partie terminale (2a) du tuyau (2), **caractérisé en ce qu'**il comprend des moyens d'actionnement (9) servant à déplacer l'élément annulaire (6) au moins entre ses trois configurations et servant à exercer une action de compression du bord d'extrémité (20) du tuyau contre le joint (4) lorsque l'élément annulaire (60) se trouve dans sa troisième configuration intermédiaire.

10. Dispositif selon la revendication 9, dans lequel il est prévu une chambre annulaire (12) étanche aux fluides entourant la partie terminale (2a) du tuyau (2) montée sur le coussin (5), **caractérisé en ce qu'**il comprend des moyens pneumatiques (16, 17, 18, 19) conçus pour créer une surpression dans la chambre (12), de telle sorte que la partie terminale (2a) suive étroitement la forme réalisée par l'assemblage du coussin (5) et du joint (4) .

11. Dispositif selon l'une quelconque des revendications 9 et 10, comprenant des moyens (21) de refroidissement de la partie terminale (2a) du tuyau (2) montée sur le coussin (5), **caractérisé en ce que** les moyens de refroidissement (16, 17, 18, 19, 21) comprennent des moyens de valve (18, 19) conçus pour créer une circulation d'air à l'intérieur de la chambre annulaire (12), tout en maintenant la chambre annulaire (12) en surpression.
